Europäisches Patentamt

European Patent Office

Office européen des brevets

(11) Numéro de publication: **0 317 415**
**A1**

(12) **DEMANDE DE BREVET EUROPEEN**

(21) Numéro de dépôt: 88402849.9

(22) Date de dépôt: 14.11.88

(51) Int. Cl.⁴: **B 64 G 6/00**

(30) Priorité: 13.11.87 FR 8715702

(43) Date de publication de la demande:
24.05.89 Bulletin 89/21

(84) Etats contractants désignés: **DE GB**

(71) Demandeur: **INTERTECHNIQUE**
**61 Rue P. Curie ZI les Gâtines BP No. 1**
**F-78370 Plaisir (FR)**

(72) Inventeur: **Beaussant, Raymond**
**4, Cité Pasteur**
**F-91220 Bretigny (FR)**

(74) Mandataire: **Fort, Jacques**
**CABINET PLASSERAUD 84, rue d'Amsterdam**
**F-75009 Paris (FR)**

(54) Equipement individuel de protection pour véhicule spatial.

(57) L'équipement individuel de protection comprend un scaphandre souple à casque muni d'une visière ouvrante (8). Le
scaphandre est équipé d'une soupape d'échappement (18) et
d'un boîtier raccordable par une tuyauterie (10) à une source
externe d'alimentation en air. Lorsque la visière est ouverte, le
boîtier distribue l'air à un réseau de conduites (14) de
ventilation débouchant autour des membres. Lorsque la visière
est fermée, une vanne appartenant au boîtier relie la tuyauterie
(10) à une rampe (16) de désembuage de la visière et relie les
conduites uniquement à la soupape d'échappement.

FIG.1.

EP 0 317 415 A1

Description

## Equipement individuel de protection pour véhicule spatial.

La présente invention a pour objet un équipement individuel de protection pour véhicule spatial, destiné surtout à une utilisation en intravéhiculaire mais permettant toutefois des sorties de durée limitée dans l'espace, par exemple lors d'un transfert.

Un tel équipement a différentes fonctions. A l'intérieur de la cabine, il doit protéger le personnel en cas de dépressurisation et de présence de gaz toxiques mais il peut être alimenté à partir d'un réseau de distribution interne comportant des prises réparties à l'intérieur de la cabine. En cas de sortie dans l'espace, il doit être autonome et maintenir autour du porteur une atmosphère respirable et réduisant les risques d'aéro-embolisme.

L'élément essentiel d'un équipement individuel de ce genre est un scaphandre suffisamment souple pour permettre une activité et équipé d'un casque rigide muni d'une visière. La survie du porteur du scaphandre exige d'une part de maintenir une atmosphère respirable, à une pression suffisante pour réduire le risque d'aéro-embolisme, d'autant plus important que le porteur du scaphandre exerce une activité plus intense et que la pression est plus faible, et d'autre part d'évacuer la chaleur due au métabolisme humain.

Il faut au surplus que l'équipement puisse être porté par le personnel pendant des phases de la mission de relativement longue durée, alors que le port du scaphandre n'est pas nécessaire pour la survie mais qu'un incident peut provoquer une dépressurisation ou l'apparition de gaz toxiques en un laps de temps très inférieur à celui requis pour revêtir le scaphandre.

On connaît déjà un équipement individuel de protection, utilisé dans les véhicules spatiaux russes, du type qui comprend un scaphandre souple à casque muni d'une visière ouvrante, équipé d'un boîtier raccordable une source externe d'alimentation en air, distribuant l'air à un réseau de conduites de ventilation débouchant autour des membres.

Lorsque cet équipement est porté visière ouverte, une fraction de l'air arrivant au boîtier est dérivé vers une rampe de désembuage de la visière ; tout l'air qui s'échappe de la rampe de désembuage de la visière et des conduites de ventilation s'échappe du scaphandre par l'ouverture laissée libre par la visière et éventuellement par les poignets.

L'air est généralement fourni par un ventilateur puisant dans l'atmosphère de la cabine. En cas de panne de dépressurisation, un second circuit entre en jeu. Il est constitué par une rampe de désembuage de la visière, alimenté en oxygène par une source appartenant à l'équipement ou au véhicule. Il n'y a plus de ventilation du corps, ce qui limite le temps de survie dans ces conditions. Le scaphandre est muni d'une soupape d'échappement permettant à l'air ou à l'oxygène provenant de la rampe de s'écouler librement à l'atmosphère.

On connaît encore des équipements individuels de secours, utilisés sur la navette spatiale américaine, permettant la sortie dans l'espace, mais complexes et très lourds.

La présente invention vise à fournir un équipement individuel de protection permettant de maintenir une ventilation du corps dans toutes les conditions d'emploi et restant cependant de constitution simple.

Dans ce but l'invention propose notamment un équipement individuel du type ci-dessus défini, caractérisé en ce que le boîtier comporte une vanne commandée, reliant lesdites conduites à la soupape d'échappement en réponse à la fermeture de la visière et assurant l'alimentation de la rampe de désembuage à partir de la source d'air ou d'une source d'oxygène s'y substituant. Visière ouverte, il n'est pas nécessaire d'alimenter la rampe de désembuage et tout l'air peut alors être utilisé pour la ventilation cependant, si on le souhaite, une alimentation en air de la rampe peut être prévue même dans ces conditions.

On voit que le trajet d'air de ventilation s'inverse lorsque l'on ferme la visière. Alors que, visière ouverte, l'air amené par les conduites débouche au niveau des pieds et de mains et revient vers l'orifice de visière, l'air de ventilation est envoyé en totalité sur la visière lorsqu'elle est fermée, ce qui améliore le désembuage et le balayage de gaz carbonique expiré, puis circule en totalité sur le corps avant de s'échapper par la soupape.

Cette solution présente l'intérêt de maintenir l'évacuation de chaleur. En cas de dépressurisation, alors que la différence de pression entre l'intérieur et l'extérieur du scaphandre est de plusieurs centaines de mbars, on conserve une ventilation à circulation d'oxygène s'effectuant suivant le même trajet que celle de l'air visière fermée. L'autonomie n'est plus limitée que par la quantité d'oxygène embarqué aussi longtemps que le niveau de métabolisme reste suffisamment faible pour que la ventilation par gaz suffise à évacuer la chaleur dégagée par le corps.

La vanne est avantageusement commandée mécaniquement par la fermeture de la visière.

La soupape d'échappement est prévue pour rester ouverte aussi longtemps que la cabine est normalement pressurisée. Elle est avantageusement de type altimétrique. Une capsule anéroïde peut être prévue pour la fermer automatiquement en cas de décompression de la cabine. Elle est habituellement munie de moyens de réglage de la pression, qui permettent, en cas de dépressurisation ou de sortie dans l'espace, de régler manuellement la pression entre une valeur minimale, par exemple de 270 mbars, qui réduit la rigidité du scaphandre et augmente la mobilité, et une valeur maximale, par exemple de 400 mbars, permettant d'écarter pratiquement le risque d'aéro-embolisme.

L'invention sera mieux comprise à la lecture de la description qui suit d'un mode particulier de réalisation, donné à titre d'exemple non limitatif. La description se réfère aux dessins qui l'accompagnent, dans lesquels :

- les figures 1 et 2 montrent schématiquement la constitution d'un équipement individuel de protection, la vanne étant représentée dans les positions qu'elle occupe visière ouverte (figure 1) et visière fermée (figure 2) ;

- la figure 3 est un schéma montrant un emplacement possible des conduites de ventilation et le trajet de circulation des gaz lorsque la visière est ouverte ;

- la figure 4 montre schématiquement une constitution possible de soupape altimétrique d'échappement, en coupe suivant un plan passant par son axe ;

- la figure 5 est un schéma montrant diverses liaisons du scaphandre lors d'une utilisation intravéhiculaire.

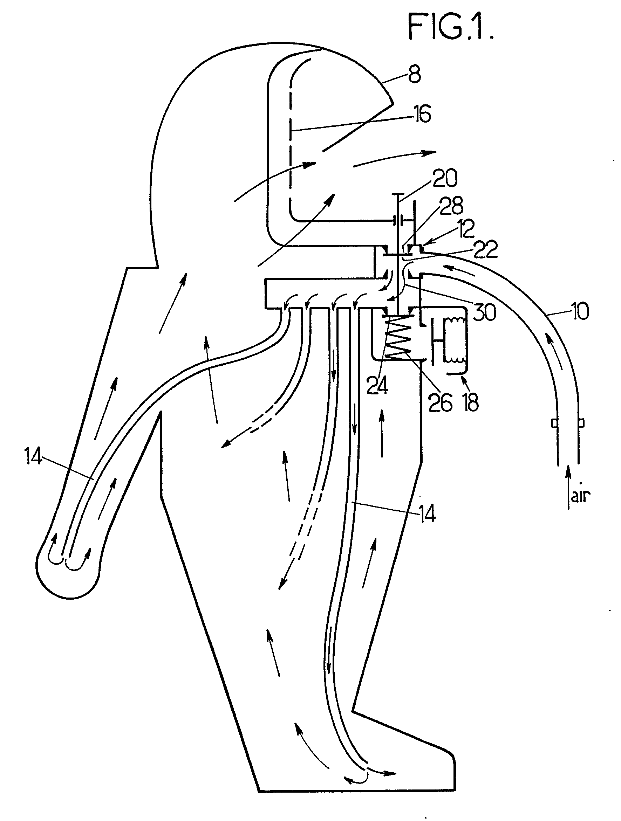

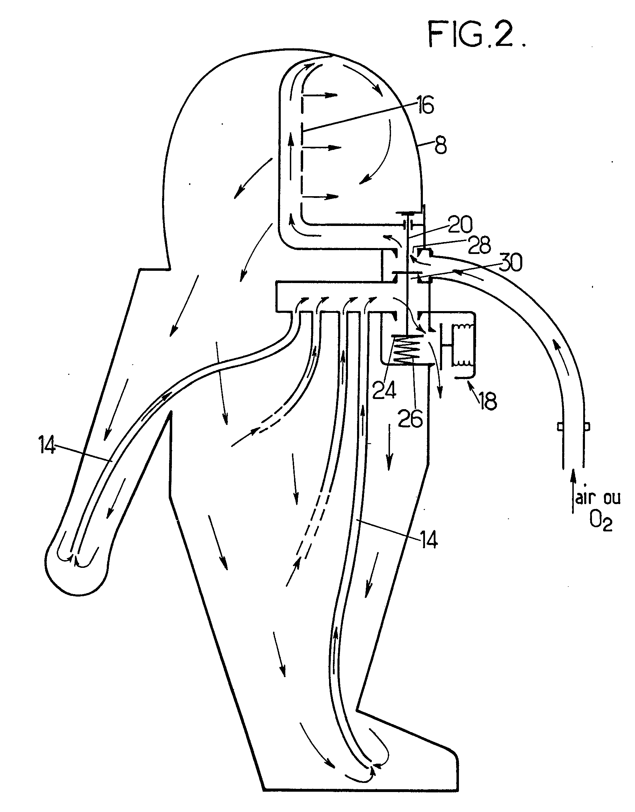

L'équipement montré en figures 1 à 3 est destiné à être porté par dessus des sous-vêtements et éventuellement un pantalon anti-g de constitution classique. La partie souple du scaphandre est en tissu composite ayant une peau étanche interne en matériau élastomère, une peau externe en tissu inextensible destinée à réduire l'allongement de la peau interne et éventuellement un système de sangles de réglage placées de façon à autoriser la mobilité au niveau des articulations, où le tissu présente des plis. Le casque, du type bulle, permet au porteur de tourner la tête sans entraîner le casque et comporte une visière transparente 8 pouvant être basculée entre une position d'ouverture (figure 1) et une position de fermeture étanche (figure 2).

Un circuit de ventilation du scaphandre comporte une tuyauterie d'alimentation 10 pouvant être raccordée à une source d'alimentation en gaz, un boîtier de distribution 12, un réseau de conduites de ventilation 14 intégré à la peau interne du scaphandre et une rampe de désembuage 16 de la visière. Les conduites 14 du réseau représenté ou "araignée" débouchent au niveau des poignets et des pieds. Mais dans certains cas on sera amené soit à raccourcir les conduites, soit à prévoir des conduites supplémentaires se terminant par exemple au niveau des genoux et/ou des coudes, soit encore à doubler les conduites.

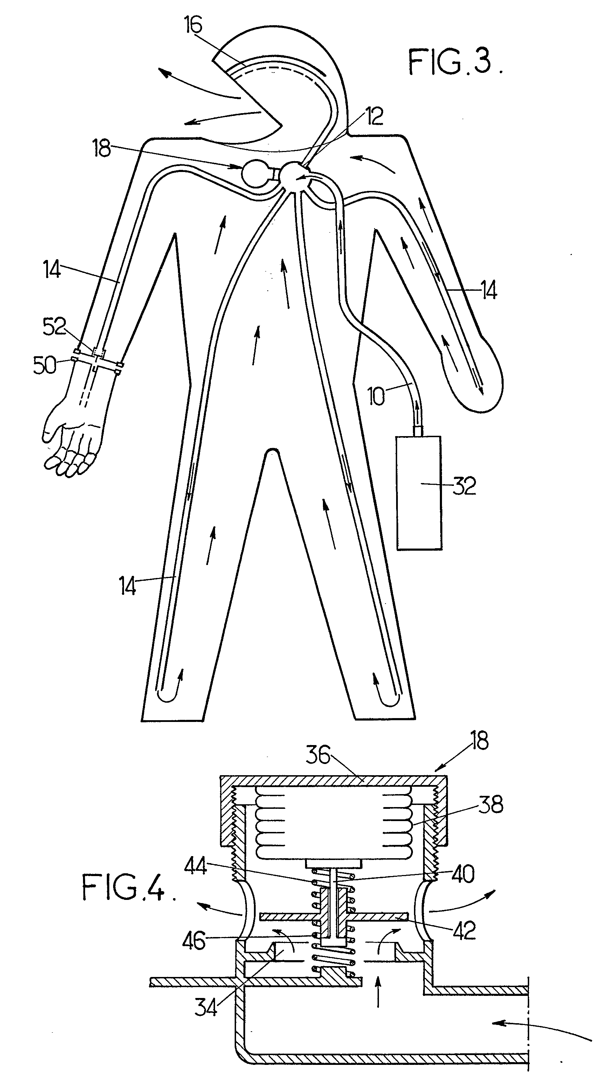

Les circuits de ventilation comportent encore une soupape altimétrique réglable 18 dont la figure 1 donne le principe. Une constitution possible de cette soupape est montrée en figure 4 et sera décrite plus loin.

Le boîtier 12 de distribution permet de répartir le flux d'air de ventilation entre les conduites 14 lorsque le scaphandre est porté visière ouverte (figures 1 et 3) et d'inverser le sens de circulation des gaz dans les conduites 14 lorsque la visière est fermée (figure 2). Ce boîtier permet d'optimiser l'utilisation des sources de gaz et de maintenir une ventilation du corps pendant les phases où la visière est fermée et où éventuellement le scaphandre est pressurisé.

Le boîtier de distribution 12 montré à titre d'exemple en figures 1 et 2 comporte un équipage mobile ayant une tige de commande 20 portant deux obturateurs 22 et 24. Un ressort 26 repousse l'équipage mobile dans une direction où les obturateurs 22 et 24 s'appliquent sur des sièges pour fermer respectivement un passage 28 d'amenée d'air à la rampe de désembuage et un passage de sortie vers la soupage d'échappement 18. L'obturateur 22 laisse libre un passage 30 d'amenée de l'air provenant de la tuyauterie 10 aux conduites 14.

Lorsque la visière 8 est ouverte, l'équipage mobile occupe la position montrée en figure 1. La circulation d'air s'effectue suivant le trajet indiqué par les flèches sur les figures 1 et 3.

Ce mode d'alimentation sera utilisé par exemple lors de phases d'attente préliminaires à une phase plus dangereuse, pour laquelle la visière sera fermée. L'équipement peut être complété par une valise portable 32 (figure 3) munie d'un tuyau de raccordement à la tuyauterie 10. Cette valise contient une bouteille d'air comprimé ou un ventilateur d'aspiration de l'air à l'atmosphère à travers un filtre et d'envoi de l'air dans la tuyauterie, une source de froid (stock de glace par exemple) et une batterie d'alimentation du moteur à entraînement du ventilateur. Cette valise est utilisée par exemple pour la marche entre la salle d'attente et le véhicule spatial, avant le tir, et pour une évacuation rapide en ambiance toxique. Elle est remplacée par un raccordement sur un circuit d'alimentation de bord lorsque le porteur de l'équipement est à son poste dans la cabine. Il suffit en général que l'air envoyé à la tuyauterie soit en surpression de 20 mbars environ par rapport à l'atmosphère ambiante pour que la ventilation reste satisfaisante.

La fermeture de la visière 8 doit entraîner la venue de l'équipage mobile du boîtier de distribution 12 dans la position montrée en figure 2. Ce déplacement peut être commandé mécaniquement, par appui d'un rebord prévu sur la visière 16 contre la tige de commande 20 ou un élément de transmission ou à distance.

La circulation d'air s'effectue alors suivant le trajet indiqué par les flèches sur la figure 2. En effet, l'obturateur 22 libère alors le passage 28 d'amenée d'air à la rampe 16 et ferme le passage d'arrivée vers les conduites 14. Mais l'obturateur 24 libère le passage de sortie vers la soupage altimétrique 18. La soupape montrée en figure 4 comporte un boîtier dans lequel est ménagé un siège définissant un passage 34 d'échappement à l'atmosphère. Un couvercle 36 dont la distance au siège peut être réglée manuellement, par exemple par vissage, porte une capsule anéroïde 38. Une tige 40 est fixée au fond mobile de la capsule et porte un obturateur 42 dont la position est fixée par l'équilibre entre les forces antagonistes qu'il subit :

- d'un ressort 44 prenant appui sur le fond mobile dans le sens de la fermeture du passage 34 ;

- d'un ressort 46 et de la surpression qui règne en amont, dans le sens de l'ouverture.

Lorsque le scaphandre est porté dans une ambiance à pression atmosphérique normale, la capsule 38 rétracte l'obturateur 42 et le ressort 46 maintient le passage 34 ouvert. Lorsqu'au contraire le scaphandre est exposé au vide, le ressort 44 tend à appliquer l'obturateur 42 sur son siège et maintient dans le scaphandre une suppression réglable à l'aide du couvercle 36, dont l'enforcement augmente la pression exercée par le ressort 44.

L'équipement est susceptible de nombreuses variantes de réalisation. En particulier, les gants peuvent être détachables au niveau du poignet. La figure 3 montre par exemple un gant raccordable au poignet correspondant au scaphandre par un connecteur étanche 50. La ventilation de la main et de l'avant bras étant assurée directement lorsque le gant est enlevé, il est possible, lorsque la conduite correspondante se prolonge jusqu'à la main, de la réaliser en deux tronçons, celui qui est solidaire de la manche étant muni d'un clapet auto-obturateur 52, dont le raccordement avec le tronçon porté par le gant provoque l'ouverture forcée.

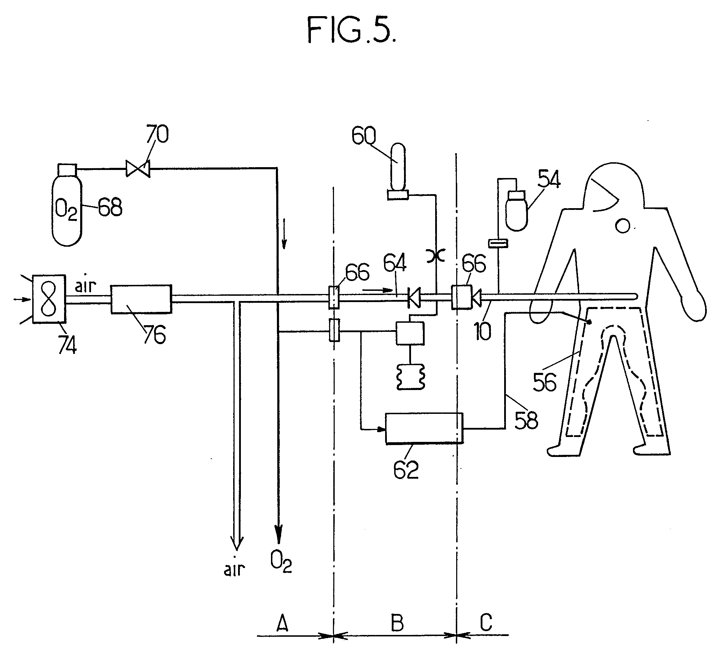

L'équipement qui vient d'être décrit peut être alimenté, lorsque le porteur est à son poste sur un siège dans le véhicule, par une installation du genre montré en figure 5. Sur cette figure, les parties A, B et C correspondent respectivement aux parties fixes de l'installation, à celles qui sont montées sur un siège éjectable et à l'équipement proprement dit.

La tuyauterie 10 du scaphandre représenté est reliée à une source portable d'oxygène sous pression 54. La liaison est commandée automatiquement ou manuellement. Lorsque le porteur du scaphandre est également muni d'un pantalon anti-g 56, un raccord correspondant 58 est prévu.

La partie B de l'installation, portée par le siège éjectable, comporte essentiellement une valve anti-g 62, des liaisons avec la partie fixe de l'installation, une bouteille 60 d'oxygène sous pression de secours et d'alimentation de la valve et des équipements de test non représentés. Un raccord 64 muni de connecteurs 66 permet de relier la tuyauterie 10 au circuit d'air et d'oxygène de cabine. Un autre raccord alimente la valve anti-g 62 à partir d'une source d'oxygène de bord 68 en dehors des périodes d'urgence. Cette source d'oxygène de bord 68 alimente pour cela une canalisation intérieure de distribution sur laquelle sont branchés les divers équipements individuels par l'intermédiaire d'un détendeur 70 qui maintient dans la canalisation une pression de 5 à 7 bars.

Les circuits de ventilation des scaphandres sont reliés à une source autonome à ventilateur 74 et filtre 76.

L'invention est susceptible de nombreuses autres variantes encore de réalisation. De plus, l'équipement qui vient d'être décrit peut être complété, notamment par un survêtement de protection permettant des sorties de courte durée dans l'espace.

**Revendications**

1. Equipement individuel de protection pour véhicule spatial, comprenant un scaphandre souple à casque muni d'une visière ouvrante (8), équipé d'un boîtier raccordable à une source externe d'alimentation en air et distribuant l'air à un réseau de conduites (14) de ventilation débouchant autour des membres, caractérisé en ce que le boîtier comporte une vanne commandée de façon à relier les conduites à une soupape d'échappement (18) en réponse à la fermeture de la visière et à alimenter en même temps une rampe (16) de désembuage de la visière à partir de la source d'air ou d'une source d'oxygène s'y substituant.

2. Equipement selon la revendication 1, caractérisé en ce que la vanne est commandée mécaniquement par la visière (8).

3. Equipement selon la revendication 1 ou 2, caractérisé en ce que la vanne est réalisée pour couper l'alimentation en air de la rampe (16) de désembuage lorsque la visière est ouverte.

4. Equipement selon la revendication 3, caractérisé en ce que ladite vanne comporte un équipage mobile ayant un premier obturateur (22) qui, lorsque la visière est fermée, relie la source à la rampe (16) et sépare la source des conduites (14) et un second obturateur qui, lorsque la visière est fermée, relie les conduites à la soupape d'échappement (18).

5. Equipement selon la revendication 4, caractérisé en ce que ladite vanne est munie de moyens élastiques (26) tendant à l'amener dans la position correspondant à l'état ouvert de la visière.

6. Equipement selon l'une quelconque des revendications précédentes, caractérisé en ce que la soupape d'échappement (18) est constituée par une soupape réglable.

7. Equipement selon l'une quelconque des revendications précédentes, caractérisé en ce que le scaphandre comporte des gants munis d'un connecteur (50) de liaison étanche avec les manches du scaphandre et portant un tronçon de conduite (14) destiné à se raccorder à un tronçon porté par la manche, muni de moyens d'ouverture forcée d'un clapet d'auto-obturation (52) équipant le tronçon porté par la manche.

FIG.1.

FIG.2.

air ou $O_2$

FIG.3.

FIG.4.

# FIG.5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 487 765 (LANG) <br> * Colonne 5, lignes 15-63; colonne 6, lignes 57-71 * <br> --- | 1,7 | B 64 G 6/00 |
| A | FR-A-2 416 694 (CANADIAN PATENTS AND DEVELOPMENT LTD) <br> * Page 2, lignes 1-10 * <br> ----- | 2,3 | |

DOMAINES TECHNIQUES
RECHERCHES (Int. Cl.4)

B 64 G
A 42 B
A 62 B

Le présent rapport a été établi pour toutes les revendications

| Lieu de la recherche | Date d'achèvement de la recherche | Examinateur |
|---|---|---|
| LA HAYE | 10-02-1989 | HAUGLUSTAINE H.P.M. |